# EUROPEAN PATENT SPECIFICATION

(11) **EP 3 932 668 B1**
(45) Date of publication and mention of the grant of the patent: **18.12.2024**
(21) Application number: 20763552.5
(22) Date of filing: 27.02.2020
(51) Int. Cl.: B32B 27/32, B65D 65/40, B32B 27/14, C08J 5/18, C08L 23/04

(54) **PACKAGING FILM, FILM BAG, AND METHOD FOR MANUFACTURING SAME**
VERPACKUNGSFOLIE, FOLIENBEUTEL UND VERFAHREN ZUR HERSTELLUNG DAVON
FILM D'EMBALLAGE, SAC DE FILM ET PROCÉDÉ DE FABRICATION ASSOCIÉ

(30) Priority: 28.02.2019 JP 2019036311
(43) Date of publication of application: 05.01.2022
(73) Proprietor: Aicello Corporation, Toyohashi-shi, Aichi 441-1115 (JP)
(72) Inventor: IWAKI, Banri, Toyohashi-shi, Aichi 441-1115 (JP)
(74) Representative: dompatent von Kreisler Selting Werner - Partnerschaft von Patent- und Rechtsanwälten mbB
(86) International application number: PCT/JP2020/007963
(87) International publication number: WO 2020/175608

(56) References cited:
- EP-A1- 2 397 325
- WO-A1-2014/111548
- WO-A1-2017/195736
- WO-A1-2018/071742
- JP-A- 2004 350 732
- JP-A- 2017 043 714
- US-A1- 2007 082 154
- US-B2- 8 815 360
- "Food and Beverage Packaging Technology : Coles/Food and Beverage Packaging Technology", 1 April 2011, WILEY-BLACKWELL, Oxford, UK, ISBN: 978-1-4051-8910-1, article KIRWAN MARK J. ET AL: "Plastics in Food Packaging : Coles/Food and Beverage Packaging Technology", pages: 157 - 212, XP055977638, DOI: 10.1002/9781444392180.ch7

## Description

### Technical Field

The present invention relates to a film for packaging liquid and solid foods and pharmaceutical products, machines and machine parts; a film bag using the same; and a method for manufacturing the same.

### Background of the Art

A film bag formed of a film has been used for packaging food products and pharmaceutical products. In order to prevent oxidation and contamination of the foods as a packaged subject, following properties are needed for the packaging film for forming the film bag; gas barrier properties of prevention of permeating of ambient oxygen; low-leachable properties of not incurring adhesion and elution of components contained in the film to the packaged subject by not leaching the components from a surface of the film; and high strength that the film bag is not teared even if it receives external force and internal pressure thereof increases. To meet these needs, the packaging film has a multilayer structure in which a plurality of types of films is laminated.

In the packaging film, superior-high cleanability is needed for an inner layer film which directly contacts the packaged subject. As raw material for the inner layer film, polyethylene which contains no additives such as slip agents and antioxidants is employed. As the polyethylene, following types are known: high-density polyethylene (HDPE) including a polymerized ethylene chain which substantially has no branched chains, and having excellent tensile strength and chemical resistance; low-density poly ethylene (LDPE) having long side chains branched from an ethylene chain; linear low-density polyethylene (LLDPE) produced by polymerizing ethylene and 1-butene or 1-hexene in the presence of a Ziegler-Natta catalyst; and metallocene catalyst polymerized type linear low-density polyethylene (mLLDPE) produced in the presence of a metallocene catalyst.

A film bag produced by employing such polyethylene is disclosed in Patent Document 1. Specifically, the film bag produced as follows is disclosed: extruding a parison having three-layered structure that the LDPE is located in an inner layer and an outer layer, and a mixed resin containing antioxidants and a catalyst active neutralizer is located in an intermediate layer; and blow-forming it.

In order to prevent oxidation and deterioration of the above-mentioned polyethylene, the polyethylene often contains the antioxidants. When preventing adhesion and elution of antioxidants to the packaged subject is needed, the polyethylene containing the antioxidants cannot be located in the inner layer. According to the film bag disclosed in Patent Document 1, the polyethylene containing the antioxidants is located in the intermediate layer and thus, adhesion and elution of the antioxidants to the packaged subject are prevented.

However, even if a resin containing the antioxidants is located in the intermediate layer as the film bag disclosed in Japanese Patent Application Publication No. 2004-350732 A, the antioxidants is gradually transferred to the inner layer made from the LDPE having low crystallinity. The antioxidants are leached at surface of the inner layer, and the adhesion and elution of the antioxidants to the packaged subject are incurred, eventually. In a result, the contamination of the packaged subject cannot be perfectly prevented.

In the film bag having the inner layer made from the LLDPE, the LLDPE easily becomes an overheating state during formation of the film bag because it generates high exothermic shear. When the LLDPE contains no antioxidants, undesirable appearance such as burning and lumps is easily incurred in the film bag and furthermore, the film bag is difficult to manufacture with high efficiency.

EP 2 397 325 A1 discloses a multilayer film for packaging fluid products. The film comprises a core layer (D) comprising a polyamide; two tie layers (C), directly adhered to the opposite durfaces of the core lyer, at least one intermediate layer (B), directly adhered to the opposite surface of the tie layer (C) comprising high density polyethylene; and two outer layers (A) comprising an ethylene/Alpha olefin copolymer.

### Summary of the Invention

### Problems to be Solved by the Invention

The present invention was made in view of solving the above-described problems, and its object is to provide a packaging film that is capable of suppressing the leaching of additives such as antioxidants from an inner layer for contacting a packaged subject, exhibits high strength, has excellent gas barrier properties of impervious to ambient oxygen, and can be easily manufactured; a film bag using the same; and a method for manufacturing the same.

### Means for Solving Problems

A packaging film of the present invention developed to achieve the objects described above comprises an inner layer for contacting a packaged subject as defined in claim 1. Said film contains linear low-density polyethylene in an amount of more than 40% by mass and no more than 90% by mass and low-density polyethylene or high-density polyethylene; does not contain any leachable components; and has at least 0.920 g/cm³ density and at least 50 µm thickness; a first adhesive layer which contains antioxidants and has less than 30 µm thickness; a gas barrier layer which has less than 30 µm thickness and being selected from an ethylene-vinyl alcohol copolymer resin polyethylene terephthalate, polyamide, a cycloolefin homopolymer and a cycloolefin copolymer; a second adhesive layer which contains antioxidants and has less than 30 µm thickness; and an outer layer, and the inner layer, the first adhesive layer, the gas barrier layer, the second adhesive layer and the outer layer are laminated in that order.

In the packaging film, the first adhesive layer and the second adhesive layer may contain carboxylic acid modified polyolefin, respectively.

A film bag comprising the packaging film according to any of the above packaging film, wherein the packaging film has a bag shape including the inner layer at a position of the inside and the outer layer at a position of the outside.

A method for producing a packaging film comprises according to claim 4 discharging an inner layer resin material containing linear low-density polyethylene in an amount of more than 40% by mass and no more than 90% by mass and low-density polyethylene and/or high-density polyethylene; a first adhesive layer resin material containing antioxidants; a gas barrier layer resin material; a second adhesive layer resin material containing the antioxidants; and an outer layer resin material, from a ring die by air-cooled tubular film blowing process so as to form a film in which an inner layer for contacting a packaged subject having at least 0.920 g/cm³ density and at least 50 µm thickness, a first adhesive layer having less than 30 µm thickness, a gas barrier layer having less than 30 µm thickness and being selected from an ethylene-vinyl alcohol copolymer resin polyethylene terephthalate, polyamide, a cycloolefin homopolymer and a cycloolefin copolymer, a second adhesive layer having less than 30 µm thickness and an outer layer are cylindrically laminated in that order.

### Effects of the Invention

According to the packaging film of the present invention, ambient oxygen is difficult to reach the inner layer because the oxygen does not permeate the gas barrier layer. Thus, in spite of the inner layer containing no antioxidants, deterioration and oxidation of the inner layer can be suppressed. The antioxidants contained in the adhesive layers does not permeate the inner layer because the inner layer contains the linear low-density polyethylene and the low-density poly ethylene and/or the high-density polyethylene in the specific mass ratio without the antioxidants, and has the specific density and thickness. In a result, the packaged subject is not contaminated by the antioxidants.

The inner layer of the packaging film is made from the mixed resin containing not only the linear low-density polyethylene but also the low-density polyethylene and/or the high-density polyethylene. The packaging film therefore has excellent flexibility; prevents incurring undesirable appearance by avoiding the deterioration and the oxidation of the polyethylene upon forming it due to suppressing the excessive exothermic shear of the linear low-density polyethylene; and can be manufactured with high efficiency.

When the thickness of first adhesive layer and/or the second adhesive layer in the packaging film is less than 30 µm, the undesirable appearance such as burning and lumps can be decreased upon forming it. When the thickness of the gas barrier layer is less than 30 µm, the packaging film is not excessively stiff and thus, decreasing of strength can be prevented.

The film bag of the present invention is suitable for packaging materials for pharmaceutical products, medical articles and foods for which high cleanability and the high strength are especially needed because the film bag is formed by the above packaging film.

According to the method for manufacturing the packaging film, the packaging film can be manufactured with a high yield.

### Brief Description of Drawings

Fig. 1 is a schematic cross-sectional view illustrating the packaging film of the present invention.
Fig. 2 is a schematic perspective view illustrating the method for manufacturing the packaging film of the present invention.
Fig. 3 is graphs illustrating measurement results of an eluted amount of antioxidants with respect to a density and a thickness of the inner layer according to the Examples of the present invention and the Comparative examples outside the present invention.

### Mode for Carrying out the Invention

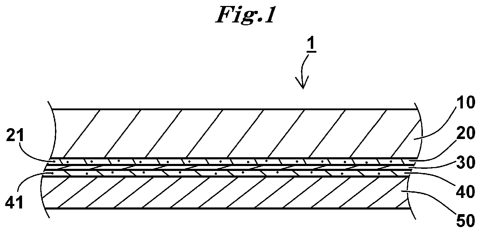

A packaging film of the present invention defines, for example, liquid and solid foods and pharmaceutical products, machines and machine parts as a packaged subject, and is a laminate having at least five film layers. Fig. 1 illustrates an embodiment thereof. In the packaging film 1, an inner layer 10 for contacting the packaged subject, a first adhesive layer 20, a gas barrier layer 30, a second adhesive layer 40 and an outer layer 50 as an exterior layer are laminated in that order. Both of the adhesive layers 20, 40 contain antioxidants 21, 41.

The thickness of the packaging film 1 is 100 to 300 µm, preferably 120 to 230 µm and more preferably 125 to 225 µm. The packaging film 1 has both of high film strength (pinhole resistance) and flexibility by having the thickness within the above ranges.

The inner layer 10 consists of a mixed resin of linear low-density polyethylene (LLDPE), and low-density poly ethylene (LDPE) which is different therefrom or high-density polyethylene, and does not contain any leachable components. The leachable components are components intendedly added to a resin as an object of imparting desirable properties thereto and making it to exhibit specific properties, and leach from the inner layer 10. Components which are ineluctably contained in the resin forming the inner layer 10 such as slight impurities and catalysts used for manufacturing the polyethylene do not the leachable components. The leachable components include antioxidant, antistatic agent, antiblocking agent, ultraviolet-absorptive agent, light-stabilizer, oxygen-absorptive agent, acid-absorptive agent, flame retardant, nucleating agent, impact strength enhancer, plasticizer, slip agent, mold release agent, coloring agent, fluorescing agent, compatibilizer, antifog agent, filler, auxiliary coloring agent, dispersant, stabilizer, reforming agent, antibacterial agent and fungicide. The inner layer 10 contains no leachable components and thus, contamination of the packaged subject is not incurred thereby.

The inner layer 10 contains the LLDPE in a range of more than 40% by mass and no more than 90% by mass. Specifically, a content rate of the LLDPE is preferably 50 to 80% by mass, more preferably 55 to 75% by mass and further more preferably 60 to 70% by mass. When the content rate exceeds the upper limit, undesirable appearance of a film such as burning is incurred. This is because the LLDPE is overheated upon extruding it from an extruder in a tubular film blowing process used for formation of a packaging film or a film bag, and generates high-exothermic shear. When the content rate is no more than the lower limit, the content rates of the LDPE and the HDPE are relatively high. Performances required for the packaging film is impaired. Specifically, for example, when the content rate of the LLDPE is no more than the lower limit and the content rate of the LDPE relatively exceeds, strength and cleanability of the film decrease. When the content rate of the LLDPE is no more than the lower limit and the content rate of the HDPE relatively overmuch, pinhole resistance of the film decreases by decreasing of flexibility thereof.

The thickness of the inner layer 10 is at least 50 µm, specifically, preferably 50 to 200 µm, more preferably 70 to 150 µm, further more preferably 75 to 100 µm. According to the inner layer 10 having the thickness in the above range, when a bag is manufactured by heat-sealing the inner layers 10 of the packaging film 1, the inner layers 10 can be thermally bonded, strongly. In a result, sealing strength can be increased.

A density of the inner layer 10 is at least 0.920 g/cm³, preferably 0.920 to 0.940 g/cm³, more preferably 0.920 to 0.930 g/cm³ and further more preferably 0.922 to 0.928 g/cm³. The density is a value obtained by measurement in accordance with the Japanese Industrial Standards K6922-1 (1997).

When the density and the thickness of the inner layer 10 are no more than the above lower limit, leaching from the inner layer 10 of the antioxidants 21, 41, which are contained in the first adhesive layer 20 and the second adhesive layer 40 is not effectively suppressed. When they exceed the above upper limit, handling of the packaging film is difficult by decreasing the flexibility.

The LLDPE forming the inner layer 10 is a copolymer of ethylene and α-olefin having 3 to 13 carbon atoms. In the LLDPE, side chains branched from a main chain of polymerized ethylene are shorter than that of the LDPE. As the α-olefin, 1-butene, 1-pentene, 1-hexene, 4-methyl-1-pentene and 1-octene are exemplified. A content rate of the α-olefin in the LLDPE is approximately 5 to 50 mol%. For example, the LLDPE may be produced under a comparably low-pressure condition of 0.1 to 30 MPa in the presence of a catalyst. The catalyst so-called a Ziegler-Natta catalyst is obtained by combining an organic aluminum compound such as trimethyl aluminum with titanium trichloride or titanium tetrachloride.

Metallocene catalyst polymerized type linear low-density polyethylene (mLLDPE) may be used in place of, or in addition to, the above LLDPE. The mLLDPE is obtained by polymerizing ethylene and α-olefin in the presence of a metallocene catalyst. The mLLDPE produced by using a metallocene compound as the metallocene catalyst is suitable for a main component of the inner layer 10 because it has excellent transparency, flexibility, cleanability and strength. The mLLDPE has a narrow molecular weight distribution. The mLLDPE therefore has especially excellent cleanability and strength because a low molecular weight oligomer remained therein is slight. The metallocene catalyst is bis(cyclopentadienyl) metal compounds. A central atom thereof includes at least one of V, Cr, Fe, Co, Ni, Ru, Os, Zr, Ti and Hf. Among these, Zr, Ti, and Hf are preferred.

The inner layer 10 may individually contain the LLDPE and the mLLDPE, and may contain a mixture thereof. Multiple LLDPE and mLLDPE having various densities and melt mass-flow rates are mixed and may be used.

The LDPE to be mixed with the LLDPE or mLLDPE has a structure in which comparatively long side chains extend from a main chain of polymerized ethylene. The LDPE has crystallinity lower than the LLDPE and HDPE, and has the high transparency. The LDPE may be called high-pressure and low-density polyethylene because it is produced under a high temperature of 300°C or more and high pressure of 100 to 400 MPa without the presence of comonomer.

The HDPE to be mixed with the LLDPE or mLLDPE has a main chain of polymerized ethylene and short side chains branched therefrom. The HDPE exhibits high tensile strength because it has the crystallinity higher than the LLDPE and LDPE. The HDPE is produced through polymerizing the ethylene and the α-olefin under comparatively low pressure of 1 to 10 MPa in the presence of a transition metal catalyst such as a Cr catalyst and the above-mentioned Ziegler-Natta catalyst.

The inner layer 10 contains the LLDPE and the LDPE and/or the HDPE in the above mass ratio, does not contain any leachable components and has the above density and thickness. The packaging film 1 therefore can simultaneously meet various properties needed for a packaging film. The various properties include prevention of leaching the antioxidants contained in the first and second adhesive layers 20, 40, improvement of the pinhole resistance, decrease of a dynamic friction coefficient and high cleanability. Furthermore, the LLDPE which generates the comparably high-exothermic shear upon melting and the LDPE and/or HDPE which are/is difficult to generate the exothermic shear compared with the LLDPE are mixed. Accordingly, the undesirable appearance such as the burning and the lumps is not occurred because generating of the exothermic shear is inhibited during formation of the film by extruding.

The densities of each polyethylene forming the inner layer 10 is not restricted as long as the above-mentioned density range of the inner layer 10 is met. The density of the LLDPE, the mLLDPE and LDPE is preferably 0.900 to 0.940 g/cm³, more preferably 0.910 to 0.930 g/cm³ and furthermore preferably 0.920 to 0.925 g/cm³. The melt mass-flow rate thereof is preferably 0.30 to 4.00 g/10 min., 0.50 to 3.00 g/10 min., further preferably 0.50 to 2.00 g/10 min. and furthermore preferably 1.00 to 2.00 g/10 min.

The density of the HDPE is preferably 0.940 to 0.965 g/cm³, more preferably 0.940 to 0.955 g/cm³ and furthermore preferably 0.943 to 0.953 g/cm³. The melt mass-flow rate thereof is 0.01 to 1.00 g/10 min., preferably 0.02 to 0.35 g/10 min., more preferably 0.05 to 0.35 g/10 min. These melt mass-flow rate is a value obtained by measurement in accordance with the Japanese Industrial Standards K6922-1 (1997).

In the first and second adhesive layers 20, 40, the antioxidants are contained in a mixed resin of which any of the above polyethylene and carboxylic acid-modified polyolefin are mixed or a resin consisting of the carboxylic acid-modified polyolefin. The thickness of the first and second adhesive layers 20, 40 is less than 30 µm, specifically, preferably 1 to 25 µm, more preferably 5 to 20 µm and furthermore preferably 10 to 20 µm. When the first and second adhesive layers 20, 40 have the thickness of 30 µm or more, the appearance of the packaging film decays due to increasing of fish eyes which are cause of the undesirable appearance. A number of the fish eyes is preferably 5/m² or less in a size of 0.5 mm². The number of the fish eyes is obtained by visually counting the fish eyes per unit area.

The carboxylic acid-modified polyolefin exhibits high adhesive strength with the inner layer 10, outer layer 50 and the gas barrier layer 30 because it has high affinity with the respective layers 10, 30, 50. In the carboxylic acid-modified polyolefin, unsaturated carboxylic acid or an anhydride compound thereof has polymerized to based polyolefin through graft polymerization. The polyolefin as the basis is preferably polyethylene (homopolymer of ethylene and/or copolymer of ethylene and α-olefin). The LLDPE, the LDPE and the HDPE are specifically exemplified. Among these, the LDPE containing α-olefin of 1 to 10 mol% is preferable. The α-olefin may include the same as used for the inner layer 10. As the unsaturated carboxylic acid used for the graft polymerization, maleic acid, maleic anhydride, fumaric acid, 1, 2, 3, 6-tetrahydrophthalic acid, methylenesuccinic acid, citraconic acid and citraconic anhydride are exemplified. The preferred carboxylic acid-modified polyolefin is specifically maleic acid-modified LLDPE. A content rate of the carboxylic acid-modified polyolefin in the first and second adhesive layer 20, 40 is 10 to 100% by mass, preferably 50 to 100% by mass.

As the antioxidants, phenolic antioxidants such as 2,6-Di-tert-butyl-4-methylphenol, n-octadecyl-3-(3', 5'-di-tert-butyl-4'-hydroxyphenyl) propionate, tetrakis[methylene-3(3',5'-di-tert-butyl-4-hydroxyphenyl)propionate] methane, and tris(3',5'-di-tert-butyl-4-hydroxybenzyl) isocyanurate; thioether antioxidants such as dilauryl 3',3'-thiodipropionate, dimyristyl 3',3'-thiodipropionate, distearyl 3',3'-thiodipropionate and pentaerythritol tetrakis(3-laurylthiopropionate); phosphite antioxidants such as tris(nonylphenyl) phosphite, distearyl pentaerythritol diphosphite, tris(2,4-di-tert-butylphenyl) phosphite and tetrakis(2,4-di-tert-butylphenyl)-4',4'-biphenylene-di-phosphite; and phenol-phosphite 2-tert-butyl-6-methyl-4-[3-[(2,4,8,10-tetra-tert-butyldibenzo[d,f][1,3,2]dioxaphosphepi n-6-yl)oxy]propyl]phenol are exemplified. These antioxidants may be used individually, or two or more antioxidants may be used in combination. The antioxidants contained in the first adhesive layer 20 and the second adhesive layer 40 may be the same or different each other.

A content rate of antioxidants in the first and second adhesive layers 20, 40 is 100 to 3000 ppm, preferably 500 to 2000 ppm and more preferably 1000 to 2000 ppm. When the antioxidants are contained in no more than the lower limit, the first and second adhesive layers 20, 40 are oxidized and deteriorated due to heat during the tubular film blowing process. Thus, the undesirable appearance such as the burning (burned marks) and the lumps (unmelting, uncrosslinking) is incurred. On the other hand, when exceeding the upper limit, the antioxidants are at risk of leaching at the surface of the inner layer 10. The thickness and a composition of the first and second adhesive layers 20, 40 may be the same or different each other.

The gas barrier layer 30 inhibits that ambient oxygen permeates the packaging film 1 and prevents oxidation of the packaged subject. As the gas barrier layer 30, an ethylene-vinyl alcohol copolymer resin, polyethylene terephthalate, polyamide, a cycloolefin homopolymer and a cycloolefin copolymer are exemplified. Among these, the ethylene-vinyl alcohol copolymer resin is preferable because it easily adheres to the first and second adhesive layers 20, 40 containing the polyethylene as a main component, has the excellent gas barrier properties and can obtain the suitable flexibility. The density of the gas barrier layer 30 is preferably 1.00 to 1.25 g/cm³, more preferably 1.10 to 1.20 g/cm³ and furthermore preferably 1.12 to 1.18 g/cm³. The thickness thereof is 1 µm or more and less than 30 µm, preferably 5 to 20 µm. When the density and the thickness are less than the lower limit, the gas barrier properties are insufficient. When they exceed the upper limit, the pinhole resistance is decreased due to degradation of the flexibility of the film.

In the ethylene-vinyl alcohol copolymer resin as the gas barrier layer 30, a content rate of the ethylene is 25 to 50 mol%, preferably 30 to 45 mol%, and the melt mass-flow rate (in accordance with Japanese Industrial Standards K6922-2(1997), measuring conditions of 210°C and 21.618 N) is 3.0 to 4.0 g/10 min., preferably 3.0 to 3.5 g/10 min.

The packaging film 1 has the inner layer 10 having at least 50 µm thickness. Moisture in the liquid packaged-subject therefore is difficult to reach the gas barrier layer 30 because it does not permeate the inner layer 10. In a result, disadvantage of decrease of the gas barrier properties due to adsorbing the moisture onto the gas barrier layer 30 made from the ethylene-vinyl alcohol copolymer resin is prevented.

The outer layer 50 covers the gas barrier layer 30 via the second adhesive layer 40. Therefore, a level of oxygen permeability lower than that of a multilayered film exposing the gas barrier layer 30 is brought to the packaging film 1. The outer layer 50 may have a composition, the density and the thickness differing from the inner layer 10.

The packaging film 1 is formed in a cylindrical shape with the inner layer 10 at a position of the inside and the outer layer 50 at a position of the outside, and used for a film bag produced through closing an opened side thereof by heat-sealing. A use of the film bag is not restricted. The film bag is especially suitable for a packaging of pharmaceutical products, products for medical purposes, foods and beverages (especially dairies), and a use of biotechnology because the packaging film 1 inhibits leaching of the antioxidants from the surface of the inner layer 10 and has the low oxygen permeability.

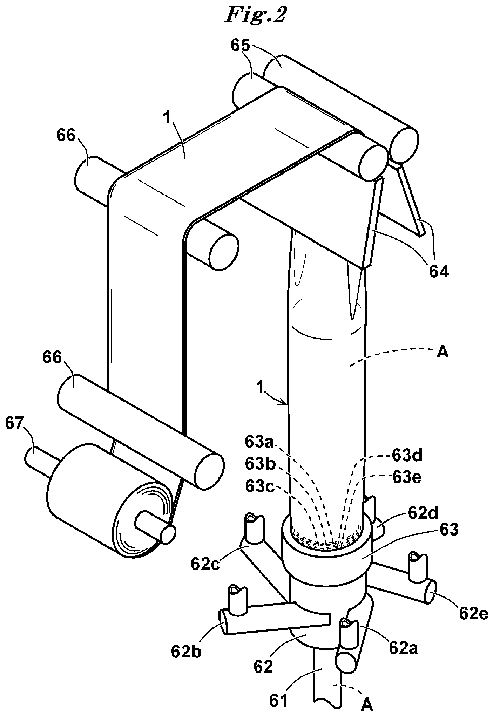

The packaging film 1 and the film bag made thereof can manufactured through a multilayered-air-cooled tubular film blowing process using a tubular film blowing machine shown in Fig. 2. According to the air-cooled tubular film blowing process, the packaging film 1 having high cleanability and a wide range width of 100 to 1500 mm can be manufactured with high efficiency and low costs.

An inner layer resin material which is a raw material by mixing the LLDPE and the LDPE or the HDPE in a specific mass ratio and does not contain any leachable components is putted in a first extruder 62a and thermally melted. In the same manner, a first adhesive layer resin material, a gas barrier layer resin material, a second adhesive layer resin material and an outer layer resin material are respectively putted in a second extruder 62b, a third extruder 62c a fourth extruder 62d and a fifth extruder 62e, and thermally melted. The melted resin materials respectively have a temperature of 180 to 230°C, preferably 190 to 210°C. The first to fifth extruders 62a to 62e are connected to a co-extruder 62. The respective resin materials melted in the first to fifth extruders 62a to 62e are extruded to the co-extruder 62. The respective resin materials which are laminated in the order of the inner layer resin material, the first adhesive layer resin material, the gas barrier layer resin material, the second adhesive layer resin material and the outer layer resin material in a direction from the inside to the outside are cylindrically co-extruded. Respective extruding amounts per unit time in the first to fifth extruders 62a to 62e are determined so that the respective layers 10 to 50 have the desired thicknesses.

The respective resin materials extruded with melting are transferred to a ring die 63 connected to an upper portion of the co-extruder 62 with remaining the lamination. The ring die 63 has a ring shape including an upper face and a lower face, and an internal cavity in a medial portion thereof. The internal cavity is in communication with an air introduction pipe 61 for introducing air A. First to fifth ring outlets 63a to 63e which are five-contiguous are upward opened in the upper face of the ring die 63. The first to fifth ring outlets 63a to 63e are cylindrically arranged at the upper face of the ring die 63 in a direction from a center to a circumference thereof in that order. The first ring outlet 63a of the innermost portion (i.e. a minimum diameter portion) is communicate with the first extruder 62a, and discharges the inner layer resin material. Similarly, the second ring outlet 63b, the third ring outlet 63c, the fourth ring outlet 63d and the fifth ring outlet 63e respectively communicate with the second extruder 62b, the third extruder 62c, the fourth extruder 62d and the fifth extruder 62e.

The air A introduced by the air introduction pipe 61 penetrating from the bottom of the co-extruder 62 to the internal cavity of the ring die 63 blows from a lower side of the ring die 63 toward an upper side thereof. The inner layer resin material is discharged from the first ring outlet 63a, the first adhesive layer resin material is discharged from the second ring outlet 63b, the gas barrier layer resin material is discharged from the third ring outlet 63c, the second adhesive layer resin material is discharged from the fourth ring outlet 63d, and the outer layer resin material is discharged from the fifth ring outlet 63e. The packaging film 1 having a tubular shape in which the inner layer, the first adhesive layer, the gas barrier layer, the second adhesive layer and the outer layer are laminated in a direction from the inside to the outside is formed by flow of the air A while rising.

A couple of guide plates 64 is placed in an upper side of the ring die 63, and a couple of press rolls 65 is placed in an upper side of the guide plates 64. The guide plates 64 are plates having a quadrangle shape. Faces of the couple of the plates are faced each other and are slantly arranged so as to be gradually separated each other in a direction of lower side. The couple of the press rolls 65 both have a columnar shape and are aligned in parallel so as to face each other and have a slight interspace between side faces of the columnar shape. The packaging film 1 are conducted to the interspace of the press rolls 65 along the slant of the guide plates 64 while it is cooled by air A. The packaging film 1 is flatly rolled by passing between the interspace of the press rolls 65 and delivered to guide rolls 66. The packaging film 1 passes the guide rolls 66 and is rolled up by a winder 67.

The film bag consisting of the packaging film 1 is produced through the following steps: supplying the packaging film 1 from the winder 67; thermally bonding the inner layers 10 straight so as to vertically traverse the packaging film 1 with having specific intervals; and cutting the vicinity of the thermally bonded parts.

A sheet may be obtained by straightly cutting the tubular packaging film 1 along the length thereof. Depending on use, the film bag may be formed through closing a plurality of sides of the packaging film 1 having a sheet shape by heat-sealing, or a more multilayered sheet may be formed by laminating the packaging film 1 having a sheet shape with any sheets.

As the specific method for manufacturing the packaging film 1, the air-cooled tubular film blowing process have been mentioned. Further it may be produced by a water-cooled tubular film blowing process and a T-die process.

### Embodiments

Hereunder, examples of a packaging film of the present invention and comparative examples outside of the present invention are explained.

### (Example 1)

Inner layer resin material and Outer layer resin material: An inner layer resin material and an outer layer resin material containing no leachable components were prepared by mixing a LLDPE 1 (0.930 g/cm³ density) and a LDPE 1 (0.921 g/cm³ density) in a mass ratio of "LLDPE LLDPE 1 = 80:20".

First and second adhesive layer resin materials: A maleic acid-modified LLDPE (containing 1000 ppm of phenolic antioxidants) was used.

Gas barrier layer resin material: An ethylene-vinyl alcohol copolymer resin was used.

The inner layer resin material, the first adhesive layer resin material, the gas barrier layer resin material, the second adhesive layer resin material and the outer layer resin material were respectively putted in first to fifth extruders 62a to 62e of a multilayered-air-cooled tubular film blowing machine shown in Fig. 2 and thermally melted. They were laminated by a co-extruder 62 and extruded to a ring die 63.

The respective resin materials which were thermally-melted were discharged from first to fifth ring outlets 63a to 63e of the ring die 63 in accordance with flow of air A which was blown out from an air introduction pipe 61. A cylindrical packaging film was formed and cooled, further flatly rolled by press rolls 65 and rolled up by a winder 67. The cylindrical packaging film was produced. A density of an inner layer 10 of the packaging film was 0.928 g/cm³, and a thickness thereof was 50 µm. Continuously, the packaging film was cut with any intervals and heat-sealed along sides opened ends. A film bag of Example 1 was obtained.

### (Examples 2 to 4)

A packaging film of Examples 2 to 4 and a film bag consisting thereof were produced in the same manner as Example 1 except for changing an extruding amount of the inner layer resin material so that the inner layer 10 has a desired thickness. A composition, a density and a thickness of the packaging film 1 of Examples 2 to 4 are shown in Table 1.

### (Comparative example 1)

A packaging film of Comparative example 1 and a film bag consisting thereof were produced in the same manner as Example 1 except for changing the inner layer resin material so that the inner layer 10 has 10 µm thickness. A composition, a density and a thickness of Comparative example 1 are shown in Table 1.

### (Comparative example 2)

A packaging film of Comparative example 2 and a film bag consisting thereof were produced in the same manner as Example 1 except for changing the inner layer resin material so that the inner layer 10 has 25 µm thickness. A composition, a density and a thickness of Comparative example 2 are shown in Table 1.

### (Comparative example 3)

A packaging film of Comparative example 3 and a film bag consisting thereof were produced in the same manner as Example 1 except for forming no second adhesive layer and outer layer by using no second adhesive layer resin material and outer layer resin material. A composition, a density and a thickness of Comparative example 3 are shown in Table 1.

With regard to the packaging film and the film bag of Examples 1 to 4 and Comparative examples 1 to 3, following tests and measurements were performed.

### (Eluting test of an antioxidation)

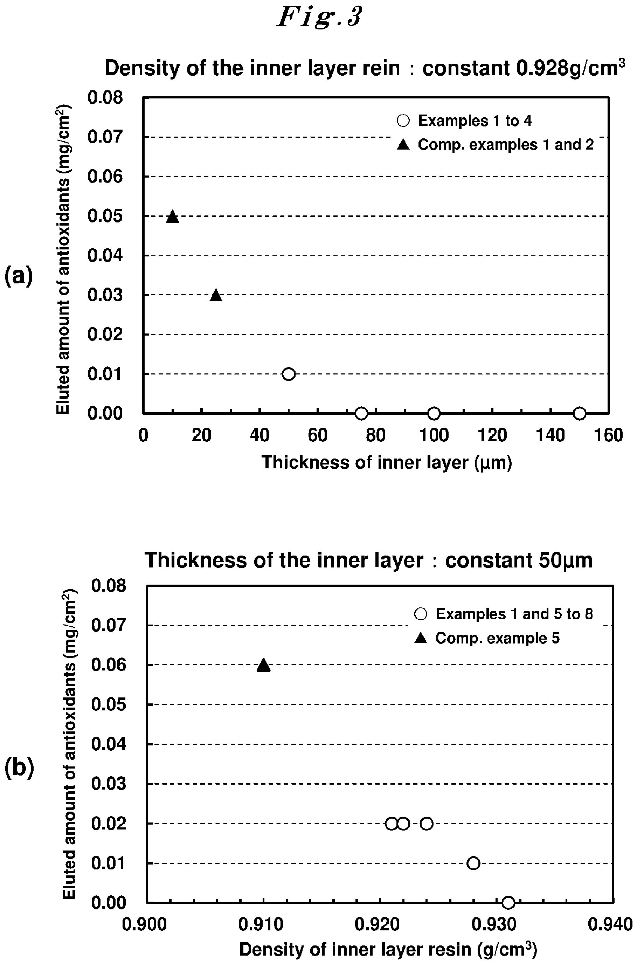

As a packaged subject, methanol for a liquid chromatography in an amount of 100 mL was poured into the film bag of Examples 1 to 4 and Comparative examples 1 to 3. An opening part of the film bag was closed by heat-seal. The respective film bags were put in a thermostatic chamber maintaining a temperature of 40°C and allowed for 24 hours. All of the film bags were opened, followed by transferring the methanol to a beaker. The methanol was concentrated by 2 to 10 mg through a Soxhlet. Peak areas were obtained through obtaining chromatograms by using a liquid chromatograph (available from JASCO Corporation, model code: 865-CO). In accordance with a standard curve preliminary prepared based on a standard sample, the antioxidants determined. Incidentally, as a column, a model name Finepak SIL C18S available therefrom ("Finepak" is registered trademark) was used. As a detector, a model code UV-970 available therefrom was used. An eluting amount of the antioxidants per unit area of the inner layer 10 was determined through dividing the obtained value by an area of the inner layer 10 which had been in contact with the methanol. A result is shown in Table 1. In addition, a relation between the thickness of the inner layer 10 and the eluting amount of the antioxidants in Examples 1 to 4 and Comparative examples 1 and 2 is shown in Fig. 3(a). In Fig. 3(a), less than 0.01 mg/cm² which is less than a detectable lower limit was plotted as 0 mg/cm². A reference value was defined as 0.02 mg/cm² or less.

### (Measurement of oxygen permeability)

A circular test piece which has a diameter of 100 mm and consists of a film having five layers or three layers structure was prepared via cutting out the packaging film of Examples 1 to 4 and Comparative examples 1 to 3. In accordance with an equal-pressure method of Japanese Industrial Standard K7126-2 (2003), the test piece was fixed with a gas permeation cell followed by respectively filling nitrogen up to an inner layer side chamber and oxygen up to an outer layer side chamber. A temperature and humidity of the two chambers were maintained at 23°C and 90% RH, respectively. An amount of the oxygen which transferred from the outer layer side chamber to the inner layer side chamber through the test piece of the packaging film was measured by using an oxygen permeation analyzer (Illinois instruments Inc., model code 8001). A result is shown in Table 1. A reference value was defined as 20 cc/(m²·24h·atm) or less.

### (Measurement of film strength)

A measurement was performed in accordance with ASTM F392. The respective packaging film were cut out so as to be a test piece having a size of 210 mm × 297 mm, followed by fixing it with the Gelvo type flex-cracking tester (available from TESTER SANGYO CO., LTD.). A number of pinholes (bores) per 300 cm² of the packaging film was counted after bending it at 1000 times. Evaluation was performed as follows depending on the counted number of the pinholes. A result is shown in Table

### 1. Criteria were defined as A to D.

A: 0 to 5 /300 cm² pinholes
B: 6 to 20 /300 cm² pinholes
C: 21 to 50/300 cm² pinholes
D: 51 /300 cm² or more pinholes

### (Measurement of dynamic friction coefficient)

A dynamic friction coefficient of the respective packaging films was measured by using a multifunctional tensile and compression testing machine (available from MinebeaMitsumi Inc., model code: TG-5kN) in accordance with Japanese Industrial Standard K7125 (1999). The lower dynamic friction coefficient of the surface of the packaging film indicates a lower level of friction with the guide plates 64 and respective rolls 65 to 67 made of a metal or a resin and between the packaging films during formation and thus, a formability and a processability are excellent. A result is shown in Table 1. A criterion was 0.7 or less.

### (Measurement of particles)

Ultrapure water of 250 mL was poured into the respective film bags having an inner surface area of 500 cm². The ultrapure water was agitated by shaking the film bags for 15 seconds. After allowing it for 40 minutes, fine particles having 0.2 µm or more in diameter were counted by using a particle counter (available from RION CO., LTD., model code: KS-42B). Evaluation was performed as follows depending on the counted number of the particles per a unit area of the packaging film. A result is shown in Table 1. Criteria were A to E
A: 0 to 50 /cm² particles
B: 51 to 200 /cm² particles
C: 201 to 500 /cm² particles
D: 501 to 1000 /cm² or more cm² particles
E: 1001 /cm² or more particles

### (Appearance observation)

Appearance of the packaging film was visually observed. A number of fish eyes having 0.5 mm² or more (orbicular nodules existing in the packaging film) was counted, followed by evaluating as follows depending on the number thereof. Incidentally, a size of the fish eyes was measured in accordance with an Estimation of contraries chart (published by the National Printing Bureau). A result is shown in Table 1.
Good: The fish eyes having a size 0.5 mm² or more were 0 to 5 /m².
Poor: The fish eyes having a size 0.5 mm² or more were 6 /m² or more.

### (Inner layer resin temperature during forming process)

In order to evaluate ease of forming for the packaging film via tubular film blowing process, a temperature of the inner layer resin material extruded from the first extruder 62a was measured at a front-end portion of the first extruder 62a by using a temperature sensor. A difference between the measured value and a predetermined temperature of the fist extruder 62a was recorded. The inner layer resin material containing the LLDPE generates high-exothermic shear. The excessively-high exothermic shear easily incurs undesirable appearance such as burning and lumps upon extruding. The smaller difference between the inner layer resin temperature upon forming process and the predetermined temperature of the fist extruder 62a is preferable. A result is shown in Table 1. Criterion was defined as plus or minus 20°C relative to the predetermined temperature.

### (Evaluation of pressure resistant properties)

A sample enclosing water within the film bag was prepared as follows: pouring water of 10 mL into the film bag (an interior size: 5 cm × 8 cm square) of Examples 1 to 4 and Comparative examples 1 to 3; and heat-sealing an edge along a side thereof by using a heat seal tester (TESTER SANGYO CO., LTD., model code TP-701-B). Incidentally, a heat seal condition was 190°C sealing temperature, 0.2 MPa sealing pressure and 1.0 second sealing time. The sample was crushed by using a tensile tester (available from Shimadzu Corporation, model code: AG-IS MS) at a test speed of 1 mm/min. Peak strength (kN) of the sample which was immediately preceding break was measured. A result was evaluated as follows. The result is shown in Table 1.
Good: Peak strength exceeded 2.5 kN.
Poor: Peak strength was 2.5 kN or less.

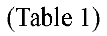

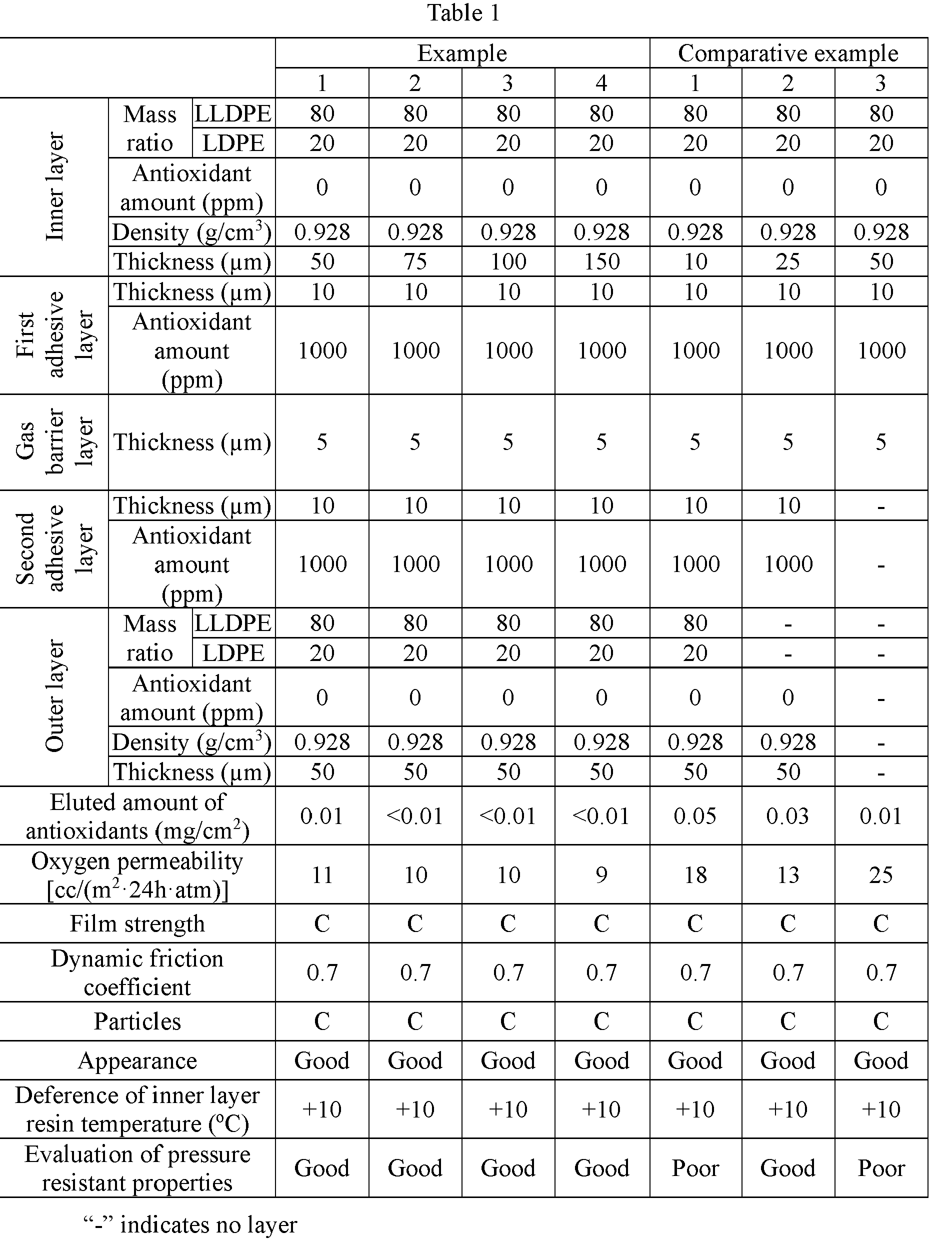

The packaging film of Examples 1 to 4 was excellent in the evaluation items all over. Especially, the eluted amount of the antioxidants thereof met the reference value of 0.02 mg/cm² or less. In contrast, the packaging film of Comparative examples 1 and 2 exhibited the high eluted amount of the antioxidants due to the thin inner layer of 10 µm and 25 µm. The packaging film of Comparative example 3 exhibited the high oxygen permeability due to no outer layer. Especially, as shown in the graph of Fig. 3(a), it is seen that the eluted amount of the antioxidants of the packaging film of Examples 1 to 4 having the inner layer which has the thickness of 50 µm or more is extremely low as compared with that of Comparative examples 1 and 2. The packaging film of Comparative example 3 merely exhibited the approximately half gas barrier properties as compared with the oxygen permeability of Example 1 because it had the exposed gas barrier layer and no outer layer. This can be seen that the oxygen permeability cannot decreased only because the packaging film has the gas barrier layer. The film bag of Comparative examples 1 having the thin inner layer and that of Comparative example 3 which is thin in whole due to no second adhesive layer and outer layer merely exhibited the low pressure resistant properties of 2.5 kN or less.

### (Example 5)

Inner layer resin material and Outer layer resin material: An inner layer resin material and an outer layer resin material containing no leachable components were prepared by mixing a LLDPE 2 (0.920 g/cm³ density) and a LDPE 2 (0.928 g/cm³ density) a mass ratio of "LLDPE 2:LDPE 2 = 90:10".

First and second adhesive layer resin materials and Gas barrier layer resin material: The same resin material as used in Example 1 was used.

A packaging film of Example 5 and a film bag consisting thereof were produced in the same manner as Example 1 except for using the above resin material. A composition, a density and a thickness of the packaging film of Example 5 are shown in Table 2.

### (Example 6)

A packaging film of Example 6 and a film bag consisting thereof were produced in the same manner as Example 5 except for changing a mass ratio of the inner layer resin material and the outer layer resin material to "LLDPE 2:LDPE 2 = 50:50". A composition, a density and a thickness of the packaging film of Example 6 are shown in Table 2.

### (Example 7)

A packaging film of Example 7 and a film bag consisting thereof were produced in the same manner as Example 5 except that a HDPE 1 (0.943 g/cm³ density) was used instead of the LDPE 2 as the inner layer resin material and the outer layer resin material. A composition, a density and a thickness of the packaging film of Example 7 are shown in Table 2.

### (Example 8)

A packaging film of Example 8 and a film bag consisting thereof were produced in the same manner as Example 6 except that the HDPE 1 was used instead of the LDPE 2 as the inner layer resin material and the outer layer resin material. A composition, a density and a thickness of the packaging film of Example 8 are shown in Table 2.

### (Comparative example 4)

A packaging film of Comparative example 4 and a film bag consisting thereof were produced in the same manner as Example 1 except that a LLDPE 3 (0.920 g/cm³ density and containing the antioxidant of 1000 ppm) was only used as the inner layer resin material and the outer layer resin material. A composition, a density and a thickness of the packaging film of Comparative example 4 are shown in Table 2.

### (Comparative example 5)

A packaging film of Comparative example 5 and a film bag consisting thereof were produced in the same manner as Example 1 except that a LLDPE 4 (0.910 g/cm³ density) was only used instead of the LLDPE 1 and the LDPE 1 as the inner layer resin material and the outer layer resin material. A composition, a density and a thickness of the packaging film of Comparative example 5 are shown in Table 2.

### (Comparative example 6)

A packaging film of Comparative example 6 and a film bag consisting thereof were produced in the same manner as Comparative example 5 except that the LLDPE 2 was used instead of the LLDPE 4 as the inner layer resin material and the outer layer resin material. A composition, a density and a thickness of the packaging film of Comparative example 6 are shown in Table 2.

### (Comparative example 7)

A packaging film of Comparative example 7 and a film bag consisting thereof were produced in the same manner as Comparative example 5 except that a LLDPE 5 (0.941 g/cm³ density) was used instead of the LLDPE 4 as the inner layer resin material and the outer layer resin material. A composition, a density and a thickness of the packaging film of Comparative example 7 are shown in Table 2.

### (Comparative example 8)

A packaging film of Comparative example 8 and a film bag consisting thereof were produced in the same manner as Example 5 except for changing a mass ratio of the inner layer resin material and the outer layer resin material to "LLDPE 2:LDPE 2 = 40:60". A composition, a density and a thickness of the packaging film of Comparative example 8 are shown in Table 2.

### (Comparative example 9)

A packaging film of Comparative example 9 and a film bag consisting thereof were produced in the same manner as Comparative example 6 except that the LDPE 2 was used instead of the LLDPE 2 as the inner layer resin material and the outer layer resin material. A composition, a density and a thickness of the packaging film of Comparative example 9 are shown in Table 2.

### (Comparative example 10)

A packaging film of Comparative example 10 and a film bag consisting thereof were produced in the same manner as Example 8 except for changing a mass ratio of the inner layer resin material and the outer layer resin material to "LLDPE 2:HDPE1 = 40:60". A composition, a density and a thickness of the packaging film of Comparative example 10 are shown in Table 2.

### (Comparative example 11)

A packaging film of Comparative example 11 and a film bag consisting thereof were produced in the same manner as Comparative example 9 except that the HDPE 1 was used instead of the LDPE 2 as the inner layer resin material and the outer layer resin material. A composition, a density and a thickness of the packaging film of Comparative example 11 are shown in Table 2.

As regards the packaging film and the film bag of Examples 5 to 8 and Comparative examples 4 to 11, the same tests and measurements as Example 1 were performed except for the evaluation of pressure resistant properties. A result is shown in Table 2. In addition, a relation between the density of the inner layer 10 and the eluting amount of the antioxidants in Examples 5 to 8 and Comparative example 5 is shown in Fig. 3(b). In Fig. 3(b), less than 0.01 mg/cm² which is less than a detectable lower limit was plotted as 0 mg/cm². Incidentally, in Comparative example 4, the inner layer thereof contained the antioxidants. In Comparative examples 6 to 11, the evaluation items such as the film strength except for the eluted amount of the antioxidants were extremely low. They therefore were not illustrated in a graph.

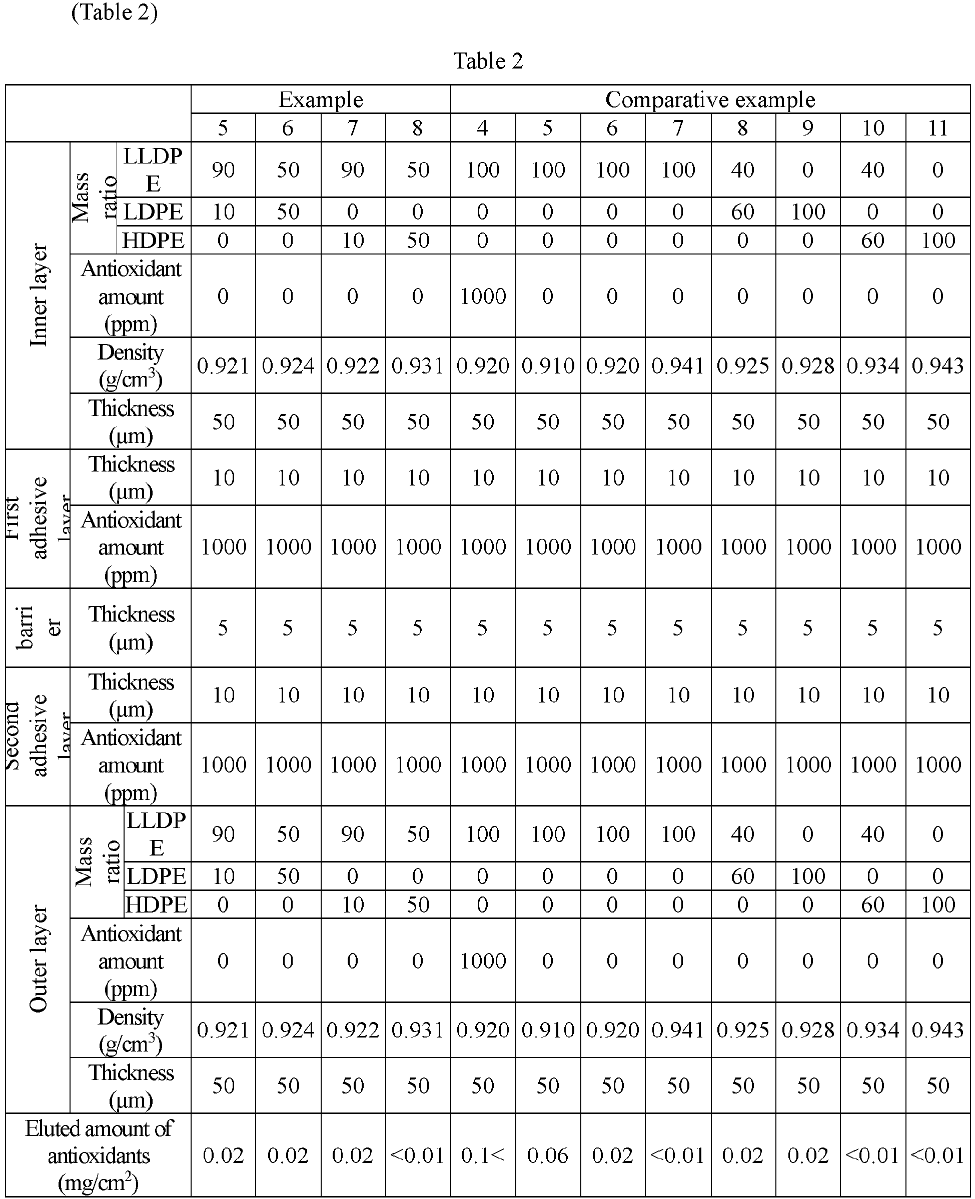

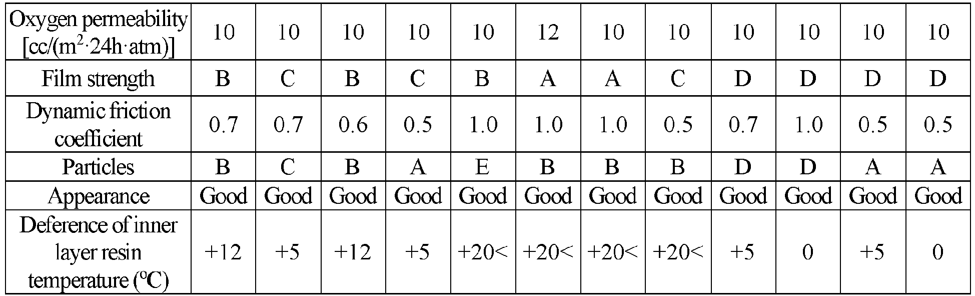

The packaging film of Examples 5 to 8 was excellent in all of the evaluation items including the eluted amount of the antioxidants. In contrast, the packaging film of Comparative example 4 exhibited the excessively eluted amount of the antioxidants and the high dynamic friction coefficient because it had the inner layer consisting of the LLDPE containing the antioxidants. As seen from Table 2 and Fig. 3(b), Comparative example 5 exhibited the excessively eluted amount of the antioxidants and the high dynamic friction coefficient because it had the inner layer consisting of the LLDPE having the density of 0.910 g/cm³ lower than 0.920 g/cm³. Further, Comparative examples 6 and 7 exhibited the high dynamic friction coefficient and the inner layer resin temperature during forming process because the inner layer thereof consisted of the LLDPE irrespective of which the inner layer had the density and the thickness equal to that of Examples. According to these, improvement of manufacturing efficiency thereof is difficult. In Comparative examples 8 to 10, when the LLDPE had a low containing ratio or was not contained, decreasing of the film strength, increasing of the dynamic friction coefficient and increasing of the particle were incurred.

As seen from Figs. 3(a) and 3(b), the film bag of Examples including the inner layer 10 having the density of 0.920 g/cm³ or more and the thickness of 50 µm or more exhibits the extremely low eluted (leached) amount of the antioxidants or very few as compared with Comparative examples including the inner layer having the density and the thickness lower than that.

### (Example 9)

A packaging film of Example 9 and a film bag consisting thereof were produced in the same manner as Example 5 except for changing a mass ratio of the inner layer resin material and the outer layer resin material to "LLDPE 2:LDPE 1 = 80:20" and an extruding amount of the inner layer resin material so that the inner layer 10 has 75 µm thickness. A composition, a density and a thickness of the packaging film of Example 9 are shown in Table 3.

### (Example 10)

A packaging film of Example 10 and the film bag consisting thereof were produced in the same manner as Example 9 except for changing extruding amounts of the first and second adhesive layer resin materials so that the first and second adhesive layers 20, 40 have 20 µm thickness. A composition, a density and a thickness of the packaging film of Example 10 are shown in Table 3.

### (Example 11)

The packaging film of Example 11 and the film bag consisting thereof were produced in the same manner as Example 9 except for increasing amount of the phenolic antioxidants, which are contained in the first and second adhesive layers 20, 40, from 1000 ppm to 1500 ppm. A composition, a density and a thickness of the packaging film of Example 11 are shown in Table 3.

### (Comparative example 12)

The packaging film of Comparative example 12 and the film bag consisting thereof were produced in the same manner as Example 9 except that the maleic acid-modified LLDPE of the first and second adhesive layers 20, 40 contains no antioxidants. A composition, a density and a thickness of the packaging film of Comparative example 12 are shown in Table 3.

### (Comparative example 13)

The packaging film of Comparative example 13 and the film bag consisting thereof were produced in the same manner as Example 9 except for changing extruding amounts of the first and second adhesive layer resin materials so that the first and second adhesive layers 20, 40 have 30 µm thickness. A composition, a density and a thickness of the packaging film of Comparative example 13 are shown in Table 3.

As regards the packaging film of Examples 9 to 11 and Comparative examples 12 and 13 and the film bag thereof, the same tests and measurements as Example 1 were performed except for the evaluation of pressure resistant properties. A result is shown in Table 3.

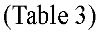

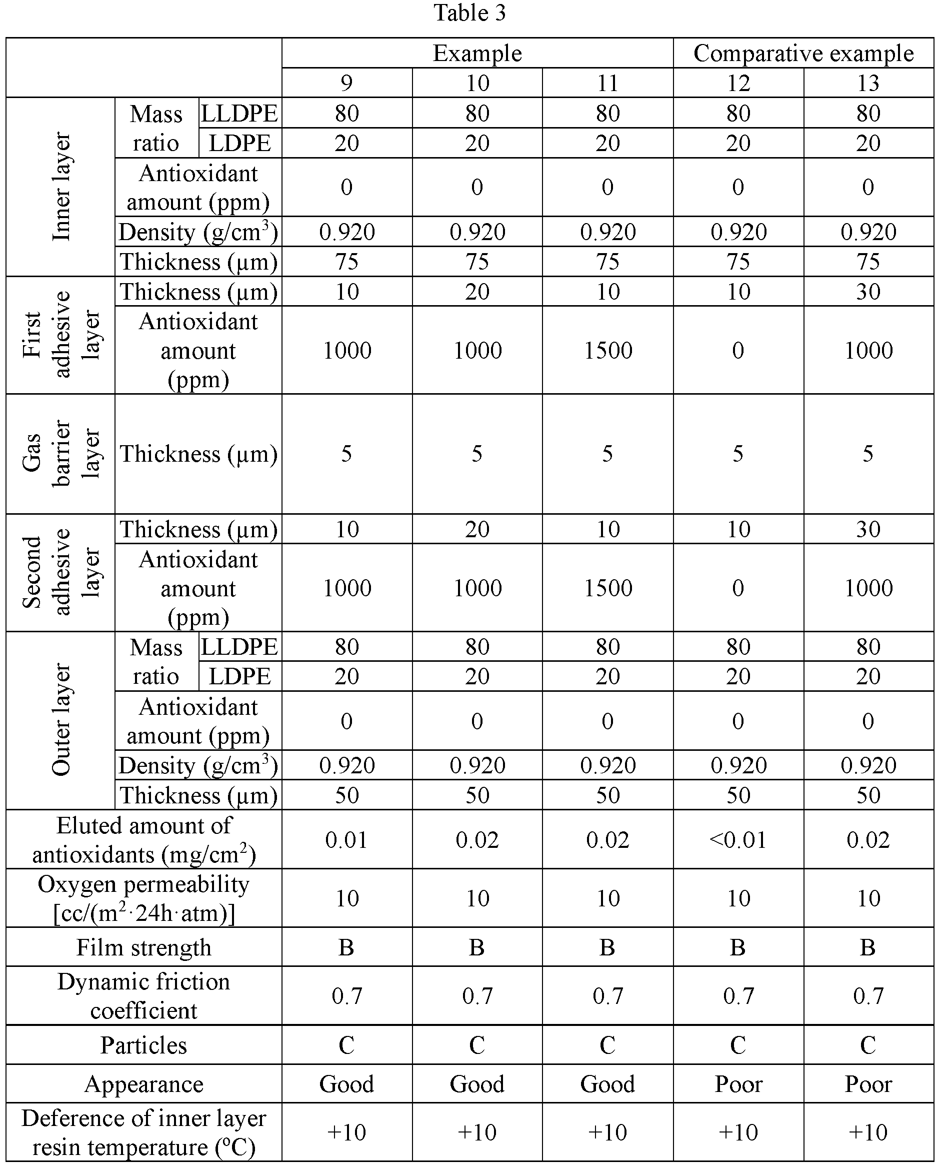

The packaging film of Examples 9 to 11 was excellent in all of the evaluation items including the eluted amount of the antioxidants. In contrast, the packaging film of Comparative examples 12 and 13 had a lot of burning and lumps due to deterioration of the resin during forming a film because it contained no antioxidants and had excessively thick adhesive layers. Undesirable appearance was incurred.

### (Example 12)

A packaging film of Example 12 and a film bag consisting thereof were produced in the same manner as Example 9 except that a LDPE 3 (0.923 g/cm³ density) was used instead of the LDPE 1 as the inner layer resin material and the outer layer resin material, and extruding amounts of the first and second adhesive layer resin materials were changed so that the first and second adhesive layers 20, 40 have 5 µm thickness. A composition, a density and a thickness of the packaging film of Example 12 are shown in Table 4.

### (Example 13)

A packaging film of Example 13 and a film bag consisting thereof were produced in the same manner as Example 12 except that extruding amount of the gas barrier layer resin material was changed so that the gas barrier layer 30 has 20 µm thickness. A composition, a density and a thickness of the packaging film of Example 13 are shown in Table 4.

### (Comparative example 14)

A packaging film of Comparative example 14 and a film bag consisting thereof were produced in the same manner as Example 12 except that extruding amount of the gas barrier layer resin material was changed so that the gas barrier layer 30 has 30 µm thickness. A composition, a density and a thickness of the packaging film of Comparative example 14 are shown in Table 4.

### (Example 14)

Inner layer resin material: An inner layer resin material containing no leachable components was prepared by mixing the LLDPE 2 (0.920 g/cm³ density) and a HDPE 2 (0.953 g/cm³ density) in a mass ratio of "LLDPE 2:HDPE 2 = 80:20".

First and second adhesive layer resin materials: The maleic acid-modified LLDPE (containing phenolic antioxidants of 1000 ppm) was used.

Gas barrier layer resin material: The ethylene-vinyl alcohol copolymer resin was used. Outer layer resin material: An outer layer resin material containing no leachable components was prepared by mixing a LLDPE 4 (0.910 g/cm³ density) and a LDPE 1 (0.921 g/cm³ density) in a mass ratio of "LLDPE 4:LDPE 1 = 80:20".

A packaging film of Example 14 and a film bag consisting thereof were produced in the same manner as Example 1 except for using the above resin materials. A composition, a density and a thickness of the packaging film of Example 14 are shown in Table 4.

### (Example 15)

A packaging film of Example 15 and a film bag consisting thereof were produced in the same manner as Example 14 except that the LLDPE 2 (0.920 g/cm³ density) was used instead of the LLDPE 4 as the outer layer resin material and extruding amount of the outer layer resin material was changed so that the outer layer 50 has 150 µm thickness. A composition, a density and a thickness of the packaging film of Example 15 are shown in Table 4.

### (Example 16)

A packaging film of Example 16 and a film bag consisting thereof were produced in the same manner as Example 14 except that the LLDPE 3 (0.920 g/cm³ density, containing 1000 ppm of the antioxidants) was used instead of the LLDPE 4 as the outer layer resin material. A composition, a density and a thickness of the packaging film of Example 16 are shown in Table 4.

### (Example 17)

A packaging film of Example 17 and a film bag consisting thereof were produced in the same manner as Example 14 except that a polyamide rein (PA, 1.020 g/cm³ density) was used instead of the LLDPE 4 and the LDPE 1 as the outer layer resin material. A composition, a density and a thickness of the packaging film of Example 17 are shown in Table 4.

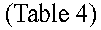

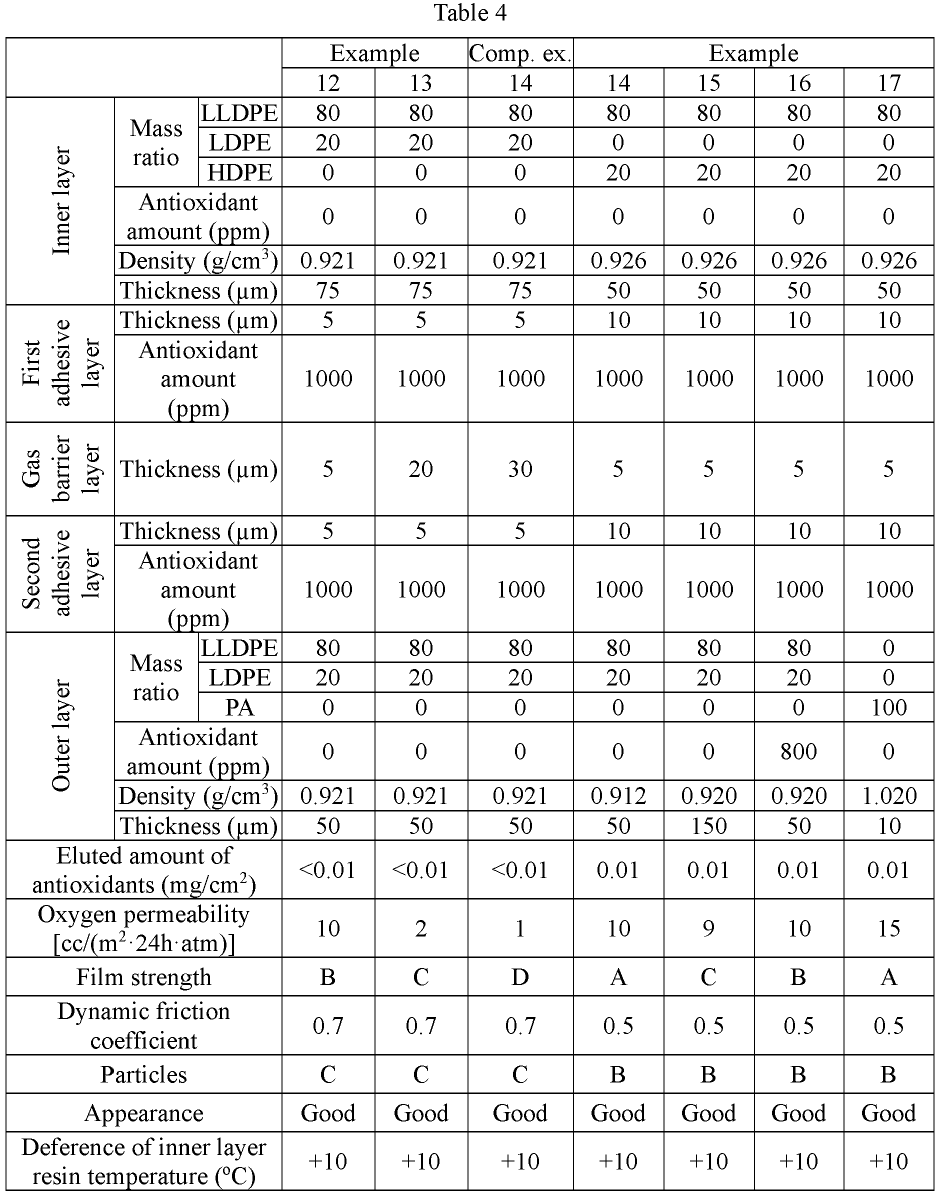

The packaging film of Examples 12 and 13 was excellent in all of the evaluation items including the eluted amount of the antioxidants. In contrast, the packaging film of Comparative example 14 was hard and weak because it had the excessively thick gas barrier layer. The strength thereof was low. According to Examples 16 and 17, it was found that the problems to be solved by the present invention can be solved even if the outer layer 50 contains the antioxidants and the polyamide resin as a raw material.

### Industrial Applicability

The packaging film and the film bag using the same of the present invention are suitably used for fields of pharmaceutical products, products for medical purposes, foods and beverages, and biotechnology. In addition, according to the method for manufacturing of the present invention, the packaging film which is suitable for the above use can be manufactured with high efficiency.

### Explanations of Letters or Numerals

Numerals mean as follows. 1: packaging film, 10: inner layer, 20: first adhesive layer, 30: gas barrier layer, 40: second adhesive layer, 50: outer layer, 61: air introduction pipe, 62: co-extruder, 62a: first extruder, 62b: second extruder, 62c: third extruder, 62d: fourth extruder, 62e: fifth extruder, 63: ring die, 63a: first ring outlet, 63b: second ring outlet, 63c: third ring outlet, 63d: fourth ring outlet, 63e: fifth ring outlet, 64: guide plates, 65: press rolls, 66: guide rolls, 67: winder, A: air

## Claims

1. A packaging film **characterized in that**:
the packaging film, in which an inner layer contains a linear low-density polyethylene in an amount of more than 40% by mass and no more than 90% by mass and the low-density polyethylene or the high-density polyethylene; does not contain any leachable components; and has at least 0.920 g/cm³ density and at least 50 µm thickness;
a first adhesive layer which contains antioxidants and has less than 30 µm thickness;
a gas barrier layer which has less than 30 µm thickness, and is selected from an ethylene-vinyl alcohol copolymer resin, polyethylene terephthalate, polyamide, a cycloolefin homopolymer and a cycloolefin copolymer;
a second adhesive layer which contains antioxidants and has less than 30 µm thickness; and
an outer layer, and
the laminated inner layer, the laminated first adhesive layer, the laminated gas barrier layer, the laminated second adhesive layer and the laminated outer layer are provided **in that** order.

2. The packaging film according to claim 1, wherein the first adhesive layer and the second adhesive layer contain carboxylic acid modified polyolefin, respectively.

3. A film bag comprising the packaging film according to claim 1 or 2, wherein the packaging film has a bag shape including the inner layer at a position of the inside and the outer layer at a position of the outside.

4. A method for manufacturing a packaging film comprising:
discharging an inner layer resin material containing linear low-density polyethylene in an amount of more than 40% by mass and no more than 90% by mass and low-density polyethylene or high-density polyethylene; a first adhesive layer resin material containing antioxidants; a gas barrier layer resin material; a second adhesive layer resin material containing the antioxidants; and an outer layer resin material, from a ring die by air-cooled tubular film blowing process so as to form a film in which an inner layer for contacting a packaged subject having at least 0.920 g/cm³ density and at least 50 µm thickness, a first adhesive layer having less than 30 µm thickness, a gas barrier layer having less than 30 µm thickness and being selected from an ethylene-vinyl alcohol copolymer resin, polyethylene terephthalate, polyamide, a cycloolefin homopolymer and a cycloolefin copolymer, a second adhesive layer having less than 30 µm thickness and an outer layer are cylindrically laminated in that order.

## Patentansprüche

1. Verpackungsfolie, **dadurch gekennzeichnet, dass**:
die Verpackungsfolie, bei der eine innere Schicht ein Linear-Low-Density Polyethylen in einer Menge von mehr als 40 Massen-% und nicht mehr als 90 Massen-% sowie Low-density Polyethylen und/oder High-Density Polyethylen; keine auswaschbaren Komponenten enthält und eine Dichte von wenigstens 0,920 g/cm³ aufweist und eine Dicke von wenigstens 50 µm aufweist;
eine erste Klebeschicht, die Antioxidantien enthält und eine Dicke von weniger als 30 µm aufweist;
eine Gassperrschicht, die eine Dicke von weniger als 30 µm aufweist und aus einem Ethylen-Vinylalkohol-Copolymerharz, Polyethylenterephthalat, Polyamid, einem Cycloolefin-Homopolymer und einem Cycloolefin-Copolymer ausgewählt ist;
eine zweite Klebeschicht, die Antioxidantien enthält und eine Dicke von weniger als 30 µm aufweist; und
eine äußere Schicht und
die laminierte innere Schicht, die laminierte erste Klebeschicht, die laminierte Gassperrschicht, die laminierte zweite Klebeschicht und die laminierte äußere Schicht in dieser Reihenfolge bereitgestellt werden.

2. Verpackungsfolie gemäß Anspruch 1, wobei die erste Klebeschicht und die zweite Klebeschicht jeweils carbonsäuremodifiziertes Polyolefin enthalten.

3. Folienbeutel, umfassend die Verpackungsfolie gemäß Anspruch 1 oder 2, wobei die Verpackungsfolie eine Beutelform aufweist, die die innere Schicht auf einer inneren Position und die äußere Schicht auf einer äußeren Position umfasst.

4. Verfahren zur Herstellung einer Verpackungsfolie, umfassend:
Ausgeben eines Harzmaterials für die innere Schicht, das Linear-Low-Density Polyethylen in einer Menge von mehr als 40 Massen-% und nicht mehr als 90 Massen-% sowie Low-Density Polyethylen oder High-Density Polyethylen enthält; eines Harzmaterials für die erste Klebeschicht, das Antioxidantien enthält; eines Harzmaterials für die Gassperrschicht; eines Harzmaterials für die zweite Klebeschicht, das die Antioxidantien enthält; und eines Harzmaterials für die äußere Schicht aus einer Ringdüse durch ein luftgekühltes Schlauchfolien-Blasverfahren, so dass eine Folie entsteht, wobei eine innere Schicht, die mit einem verpackten Gegenstand in Kontakt kommen soll und eine Dichte von wenigstens 0,920 g/cm³ aufweist und eine Dicke von wenigstens 50 µm aufweist, eine erste Klebeschicht, die eine Dicke von weniger als 30 µm aufweist, eine Gassperrschicht, die eine Dicke von weniger als 30 µm aufweist und aus einem Ethylen-Vinylalkohol-Copolymerharz, Polyethylenterephthalat, Polyamid, einem Cycloolefin-Homopolymer und einem Cycloolefin-Copolymer ausgewählt ist, eine zweite Klebeschicht, die eine Dicke von weniger als 30 µm aufweist, und eine äußere Schicht in dieser Reihenfolge zylindrisch laminiert werden.

## Revendications

1. Feuille d'emballage, **caractérisée en ce que**
ladite feuille d'emballage, dans laquelle une couche intérieure contient un polyéthylène basse densité linéaire dans une quantité de plus de 40 % en masse et n'excédant pas 90 % en masse et du polyéthylène basse densité et/ou du polyéthylène haute densité, ne contient pas de composants lessivables, et présente une densité d'au moins 0,920 g/cm³ et une épaisseur d'au moins 50 µm,
une première couche adhésive qui contient des antioxydants et présente une épaisseur de moins de 30 µm,
une couche de barrière aux gaz qui présente une épaisseur de moins de 30 µm et est choisie parmi une résine copolymère d'éthylène-alcool vinylique, du poly(téréphtalate d'éthylène), du polyamide, un homopolymère de cyclooléfine, et un copolymère de cyclooléfine,
une deuxième couche adhésive qui contient des antioxydants et présente une épaisseur de moins de 30 µm, et
une couche extérieure, et
la couche intérieure laminée, la première couche adhésive laminée, la couche de barrière aux gaz laminée, la deuxième couche adhésive et la couche extérieure laminée sont procurées dans cet ordre.

2. Feuille d'emballage selon la revendication 1, dans laquelle ladite première couche adhésive et ladite deuxième couche adhésive contiennent chacune un polyoléfine modifié par acide carboxylique.

3. Sachet en feuille, comprenant ladite feuille d'emballage selon la revendication 1 ou 2, dans lequel ladite feuille d'emballage présente une forme de sachet, incluant la couche intérieure dans une position de l'intérieur et la couche extérieure dans une position de l'extérieur.

4. Procédé pour fabriquer une feuille d'emballage, comprenant l'étape consistant à :
délivrer un matériau de résine pour la couche intérieure, contenant un polyéthylène basse densité linéaire dans une quantité de plus de 40 % en masse et n'excédant pas 90 % en masse et du polyéthylène basse densité ou du polyéthylène haute densité, un matériau de résine pour la première couche adhésive contenant des antioxydants, un matériau de résine pour la couche de barrière aux gaz, un matériau de résine pour la deuxième couche adhésive contenant les antioxydants, et un matériau de résine pour la couche extérieure, à partir d'une filière tubulaire par un procédé de soufflage de feuille tubulaire, refroidi à l'air, pour former une feuille, dans lequel une couche intérieure pour venir en contact avec un objet emballé présentant une densité d'au moins 0,920 g/cm³ et une épaisseur d'au moins 50 µm, une première couche adhésive présentant une épaisseur de moins de 30 µm, une couche de barrière aux gaz présentant une épaisseur de moins de 30 µm et choisie parmi une résine copolymère d'éthylène-alcool vinylique, du poly(téréphtalate d'éthylène), du polyamide, un homopolymère de cyclooléfine, et un copolymère de cyclooléfine, une deuxième couche adhésive présentant une épaisseur de moins de 30 µm, et une couche extérieure sont laminées de manière cylindrique dans cet ordre.
